# FASCICULE DE BREVET EUROPEEN

(11) **EP 3 228 083 B1**
(45) Date de publication et mention de la délivrance du brevet: **28.12.2022**
(21) Numéro de dépôt: 15808747.8
(22) Date de dépôt: 26.11.2015
(51) Int. Cl.: H04N 21/254, H04N 21/436, H04N 21/45, H04N 21/4627, G06F 21/10, G06F 21/33, G06F 21/44, G06F 21/62, G06F 16/43, H04L 9/40

(54) **PROCÉDÉ DE GESTION DU DROIT D'ACCÈS A UN CONTENU NUMÉRIQUE**
VERFAHREN ZUR VERWALTUNG DES ZUGRIFFSRECHTS AUF EINEN DIGITALEN INHALT
METHOD TO MANAGE ACCESS RIGHTS TO A DIGITAL CONTENT

(30) Priorité: 04.12.2014 FR 1461921
(43) Date de publication de la demande: 11.10.2017
(73) Titulaire: Orange, 92130 Issy-les-Moulineaux (FR)
(72) Inventeur: CONAN, Martin, 35510 Cesson Sevigne (FR); LE GUILLOU, Xavier, 35410 Chateaugiron (FR)
(86) Numéro de dépôt international: PCT/FR2015/053227
(87) Numéro de publication internationale: WO 2016/087750

(56) Documents cités:
- EP-A2- 0 833 511
- WO-A2-2004/038568
- US-A1- 2012 331 056
- US-A1- 2013 212 610

## Description

### Domaine technique

L'invention se rapporte à un procédé de gestion du droit d'accès à un contenu numérique. L'accès concerne en particulier un dispositif de déport. Ce dispositif de déport s'intercale entre un dispositif, à l'origine d'une demande d'accès à un contenu, et un dispositif de restitution ; le dispositif de déport a pour fonction de déporter la restitution d'un contenu sur un dispositif autre que celui à l'origine de la demande d'accès. ce dispositif de déport a entre autres pour fonction l'accès au contenu et la fourniture du contenu au dispositif de restitution.

Le dispositif de déport peut prendre la forme d'une clé électronique (en anglais, dongle) connectée au dispositif de restitution et dotée d'une fonction de communication, par exemple sans fil de type WiFi, pour pouvoir se connecter à un réseau, par exemple un réseau local.

Le dispositif visé ci-dessus sera, dans les exemples décrits ci-dessous, un dispositif mobile tel qu'un Smartphone ou une tablette numérique.

### Etat de la technique

Avec le développement des réseaux et des dispositifs mobiles, il est aujourd'hui possible de restituer des contenus multimédia numériques (vidéo, audio, etc.) sur un dispositif mobile d'un utilisateur, par exemple un smartphone ou une tablette numérique.

Cependant, dans un certain nombre de situations, et notamment lorsque l'utilisateur du dispositif mobile se trouve dans un réseau local, il lui est plus agréable de restituer le contenu multimédia, par exemple un film, sur un poste de télévision ou sur un autre terminal du réseau local, par exemple un ordinateur, disposant d'un plus grand écran que le dispositif mobile. Par « restituer », on entend ici la mise à disposition du contenu pour l'utilisateur : visualisation, affichage, restitution sonore, etc.

On rappelle ici qu'un réseau local, aussi appelé réseau domestique, est un réseau informatique qui relie ensemble, avec ou sans fils, des terminaux (ordinateurs, périphériques d'impression, de restitution, de stockage, etc.). Un réseau domestique comporte généralement un équipement routeur, aussi communément appelé passerelle domestique, ou passerelle de service, élément intermédiaire assurant la redirection, ou routage, des paquets de données entre les différents terminaux et les réseaux qui lui sont connectés. Un tel réseau domestique connecte souvent les différents terminaux en utilisant la technologie WiFi. On rappelle ici que l'appellation Wifi (pour « Wireless Fidelity ») rassemble des technologies de transmission sans fil permettant de créer des réseaux informatiques sans fil basés sur les normes de la famille IEEE 802.11.

L'écran du dispositif mobile étant souvent de taille réduite, et les hauts parleurs de qualité médiocre, il n'est pas agréable d'y restituer un contenu de type multimédia. De plus, il est malaisé de restituer de tels contenus sur l'écran d'un dispositif mobile tout en l'utilisant à d'autres fonctions, comme par exemple la gestion des appels téléphoniques, des messages textuels, etc.

Il est donc intéressant, à plusieurs points de vue, de déporter la restitution du contenu multimédia sur un autre dispositif dit dispositif de déport.

A cet effet sont apparus récemment des produits qui permettent de restituer des contenus multimédia sur un PC (ordinateur personnel) ou un TV (téléviseur) tout en déchargeant le dispositif mobile des tâches de décodage, affichage, restitution sonore, etc., inhérentes à la restitution d'un contenu numérique.

Dans cette catégorie, il existe des dispositifs aptes à restituer en temps réel des contenus numériques proposés sous formes de flux, se présentant sous forme d'une clé électronique se branchant sur un port multimédia de type HDMI (de l'anglais High-Definition Multimedia Interface, une interface électrique et logique permettant le transfert de données numériques multimédia non compressées en haute définition) d'un téléviseur. Le contenu multimédia issu d'une application, comme par exemple une application de téléchargement est sélectionné par l'utilisateur sur un premier terminal connecté au réseau local (smartphone, tablette, ordinateur, etc.) et restitué sur le téléviseur via le dispositif de déport.

Dans cette configuration, les principales étapes au niveau du dispositif de déport sont les suivantes, en supposant que l'appairage a été réalisé :
- ouverture d'un canal de communication point à point entre le dispositif portable et le dispositif de déport ;
- réception par le dispositif de déport d'un identifiant d'un contenu numérique à restituer ;
- accès, par le dispositif de déport, au contenu identifié sur le serveur de contenus.

Un problème est que plusieurs dispositifs de déport sont disponibles et il n'est pas toujours souhaitable que tous les dispositifs de déport aient un accès au contenu sélectionné, tant pour le fournisseur de contenus que pour l'utilisateur. En effet, le fournisseur de contenus peut souhaiter qu'un sous-ensemble de dispositifs de déport n'accède au contenu ; aussi un utilisateur, par exemple un père de famille peut souhaiter, en supposant que chaque membre de la famille possède un dispositif de déport, que seuls certains membres aient accès au contenu, à la manière d'une application de contrôle parental.

Les demandes US 2013/0212610 et EP0833511 ont trait à la fourniture de données d'accès à un contenu.

Aussi, dans les systèmes actuels, lorsqu'un contenu est acheté, par exemple via une application de vidéo à la demande, ce contenu ne peut être consommé que sur des dispositifs imposés, par exemple par un opérateur par le fournisseur de contenus ; par exemple, si un foyer dispose d'un compte, un contenu acheté sera accessible par des dispositifs associés au compte désignés par le fournisseur.

L'invention vient améliorer la situation.

### L'invention

Selon un premier aspect fonctionnel, l'invention a trait à un procédé de gestion de l'accès, par un dispositif de déport, à un contenu stocké sur un serveur de contenus, tel que défini dans la revendication 1.

Lors de l'étape d'obtention, le dispositif de déport reçoit depuis ledit dispositif, les données d'accès. L'invention offre la possibilité de désigner, depuis un dispositif qui demande un accès, un dispositif de déport destinataire, voire plusieurs dispositifs de déport destinataires, et de transmettre les données d'accès, depuis un dispositif, à ce (ou ces) dispositif(s)s de déport le moment souhaité. Grâce aux données d'accès, le dispositif de déport dispose de toutes les informations permettant un accès au contenu. Si ces données d'accès sont valides un accès sera autorisé et un déport de la restitution est autorisé. Au contraire si ces données ne sont pas valides l'accès sera refusé.

On comprend ici que l'invention, en supposant qu'un groupe d'utilisateurs par exemple une famille, dispose d'un ensemble de dispositifs de déport, permet de restreindre l'accès à un sous-ensemble de dispositifs de déport, jouant ainsi le rôle de contrôle parental.

Aussi, le fait que les données d'accès incluent au moins un identifiant de déport évite par la suite de refaire appel à l'émetteur des données d 'accès. Celui qui vérifie les droits d 'accès, par exemple le serveur de contenus, reçoit depuis un dispositif de déport les données suffisantes à la vérification à savoir l'identifiant du dispositif de déport, et les données d'accès qui incluent le ou les dispositifs de déports autorisés.

On verra dans la suite, dans un exemple de réalisation, que les données d'accès incluent un identifiant d'un contenu, un identifiant d'un dispositif de déport fourni lors de la demande et une signature électronique dudit au moins un identifiant calculée au moyen d'une clé de signature. Ce mode permet, grâce à la signature présente dans les données d'accès, de vérifier l'intégrité des données d'accès avant d'autoriser un accès au contenu, notamment l'intégrité de ou des identifiants de dispositifs de déport autorisés. En effet, si ces derniers sont intègres, une correspondance entre un identifiant de dispositif de déport autorisé et l'identifiant du dispositif de déport à l'origine de la demande d'accès suffit à autoriser l'accès au contenu identifié dans les données d'accès. Les données d'accès sont donc protégées contre le vol.

Selon un premier mode de mise en oeuvre particulier de l'invention, qui pourra être mis en oeuvre alternativement ou cumulativement avec le précédent, l'étape de préalable de demande d'autorisation et l'étape de transmission sont réalisés par deux dispositifs distincts. Ce mode offre la possibilité de demander une autorisation depuis un premier dispositif et de transmettre les données d'accès à un dispositif de déport depuis un autre dispositif. Par exemple, dans une famille, le père demande une autorisation d'accès depuis un dispositif, ensuite les données d'accès peuvent être utilisées par un autre dispositif par exemple par celui de sa fille pour être transmises à un dispositif de déport.

Selon un deuxième mode de mise en oeuvre particulier de l'invention, qui pourra être mis en oeuvre alternativement ou cumulativement avec le précédent, la demande d'autorisation est accompagnée d'au moins un identifiant de dispositif de déport choisi dans une liste d'identifiants de dispositifs de déport. Par exemple la liste d'identifiants de dispositifs de déport concerne un même groupe d'utilisateurs. Si le groupe est une famille, la sélection d'un identifiant (ou plus) dans la liste permet de restreindre l'accès au dispositif de déport concerné ; les autres dispositifs de déport ne pourront pas accéder au contenu concerné. En reprenant l'exemple décrit ci-dessus, le père de famille peut aussi désigner dans sa demande d'autorisation le ou les dispositifs qui seront habilités à transmettre les données à un dispositif de déport.

Le groupe d'utilisateurs est par exemple des utilisateurs d'un réseau local géré par une passerelle, par exemple une passerelle domestique.

Selon un troisième mode de mise en oeuvre particulier de l'invention, qui pourra être mis en oeuvre alternativement ou cumulativement avec le précédent, l'étape d'obtention est précédée d'une étape de transmission des données d'accès par un dispositif (MOB1) à destination du dispositif de déport, et en ce que le dispositif informe le serveur de contenus de la réalisation de ladite étape de transmission. De cette manière, des données d'accès ne sont activées que lorsqu'elles sont transmises à un dispositif de déport. En d'autres mots, un serveur de contenus recevant des données d'accès sans recevoir d'information sur la réalisation du partage des données d'accès avec un dispositif de déport, n'autorise pas l'accès au contenu.

Selon un premier aspect matériel, l'invention a trait à un Système tel que défini dans la revendication 4.

Selon un autre aspect matériel, l'invention a trait à un programme d'ordinateur apte à être mis en oeuvre sur un dispositif, tel que défini ci-dessus, le programme comprenant des instructions de code qui, lorsqu'il est exécuté par un processeur, réalise les étapes du procédé définies ci-dessus relativement au premier aspect fonctionnel.

Selon un autre aspect matériel, l'invention a trait à un programme d'ordinateur apte à être mis en oeuvre sur un dispositif de déport tel que défini ci-dessus, le programme comprenant des instructions de code qui, lorsqu'il est exécuté par un processeur, réalise les étapes du procédé définies ci-dessus relativement au deuxième aspect fonctionnel.

La nature des programmes visés ci-dessus est quelconque. Ils peuvent être téléchargés depuis un réseau de communication et/ou enregistrés sur un support lisible par ordinateur.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
La figure 2 représente les circuits d'un dispositif mobile et d'un dispositif de déport.
La figure 3 est un chronogramme illustrant un mode de réalisation d'une première phase du procédé de l'invention. Cette première phase a trait à une commande d'un contenu.
La figure 4 est un chronogramme illustrant un mode de réalisation d'une deuxième phase du procédé de l'invention. Cette deuxième phase sera consacrée à l'accès, par le dispositif de déport, au contenu commandé comme nous le verrons ci-dessous.

### Description détaillée d'un exemple de réalisation illustrant l'invention

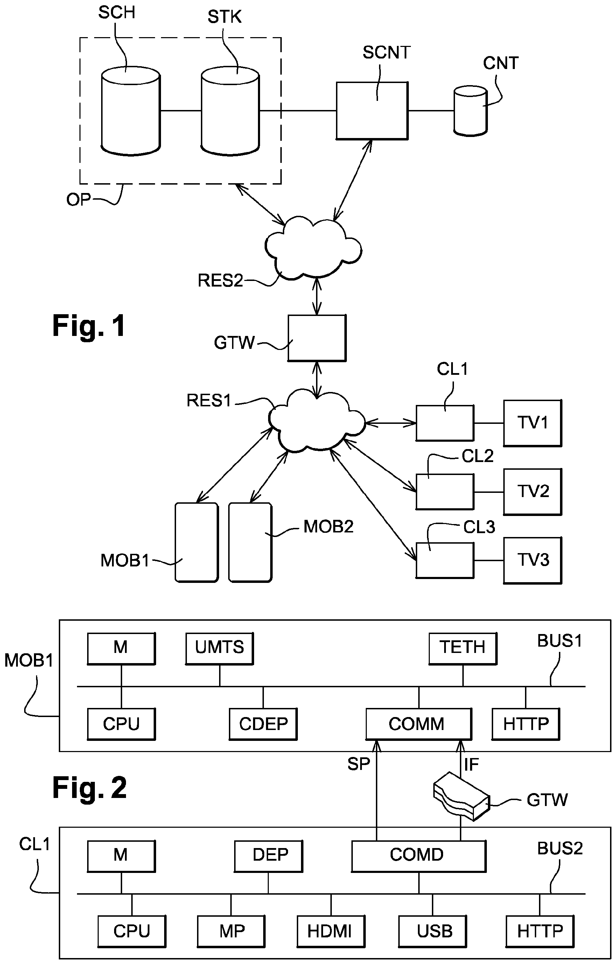

La figure 1 représente un système SYS comprenant
- Un serveur de signature SSIG apte à signer des données
- Un serveur de tickets STK aptes à délivrer des droits d'accès à un contenu ci-après désigné par le terme « ticket »
- Un serveur de contenus SCNT apte à délivrer des contenus.
- Des dispositifs MOB1 et MOB2, illustrés au moyen de deux dispositifs mobiles à savoir des smartphone ;
- Au moins un dispositif de déport ; dans notre exemple plusieurs dispositifs de déport CL1-CL3 qui permettent notamment l'accès à des contenus de manière à être restitués sur des dispositifs de restitution TV1-TV3, respectivement.

Dans notre exemple, les serveurs de signature et de ticket sont situés dans un même réseau appartenant à un même opérateur OP ; ce dernier ayant la charge des comptes de dispositifs mobiles MOB1-MOB2 et de dispositifs de déport CL1-CL3.

Comme expliqué dans le préambule de la demande, un dispositif de déport prend la forme d'une clé électronique (en anglais, dongle) connectée au dispositif de restitution et dotée d'une fonction de communication, par exemple sans fil de type WiFi, pour pouvoir se connecter à un réseau de communication par exemple à un réseau local RES1 géré par une passerelle domestique GTW.

Les serveurs SSIG et STK décrits ci-dessus, sont aptes à communiquer avec le serveur de contenus via un second réseau RES2. Dans notre exemple, ce second réseau est un réseau internet étendu (WAN, pour Wide Area Network, par opposition à un réseau local de type LAN - Local Area Network).

Les serveurs peuvent communiquer avec la passerelle GTW via ce second réseau RES2.

Dans notre exemple, les dispositifs mobiles et de déport sont aptes à établir des connexions avec la passerelle de service GTW reliée au second réseau RES2.

Le premier réseau RES1 est par exemple un réseau local IP (pour Internet Protocol, désignation du protocole de base pour les réseaux de type Internet et par extension, nom du réseau lui-même) et le second réseau est par exemple de type ADSL (de l'anglais Asymmetric Digital Subscriber Line).

Le serveur de contenus SCNT héberge notamment des contenus pour mise à disposition à des dispositifs en particulier à ceux du réseau local RES1. L'exemple choisi concerne un serveur de contenus ; cependant ce serveur peut-être éclaté en plusieurs équipements, par exemple, les contenus peuvent être stockés dans une base de données distincte du serveur.

La passerelle de service GTW comporte une fonction de communication Wi-Fi, ou point d'accès (en anglais : AP, pour Access Point), qui lui permet de communiquer sans fil avec les dispositifs du réseau local. Ce point d'accès inclut un module radio bidirectionnel pour émettre ou recevoir les signaux dans le réseau local.

Un dispositif MOB1 ou MOB2 est par exemple un ordinateur personnel (PC), un Smartphone (téléphone mobile intelligent), un PDA (« Personnal Digital Assistant ») une tablette numérique, ou encore un ordinateur portable, qui peut être ou non connecté à un réseau mobile (non représenté).

Un dispositif de restitution est par exemple un téléviseur TV.

Dans notre exemple, à un dispositif de déport correspond un dispositif de restitution. Bien évidemment, l'invention pourrait être mise en oeuvre avec un dispositif de déport associé à plusieurs dispositifs de restitution.

Une application s'exécutant sur le dispositif mobile MOB1/MOB2, dans notre exemple une application TV de contenus dits « live », c'est à dire de type « chaîne de télévision », ou à la demande, permet à l'utilisateur de sélectionner un contenu multimédia destiné à être rendu sur un téléviseur.

Le téléviseur est associé au dispositif de déport, connecté dans notre exemple sur un port vidéo HDMI du téléviseur et se présentant sous la forme d'une clé électronique (en anglais, « dongle »).

Suite à une sélection d'une fonction spécifique sur le dispositif mobile (par exemple une touche sélectionnable par pression dans le cas d'un écran tactile), le contenu multimédia est dirigé vers la clé et peut être joué sur le téléviseur ; en d'autres mots la restitution du contenu est déportée sur le téléviseur. La clé électronique peut alors se connecter elle-même au serveur de contenus SCN du réseau WAN RES sur lequel elle récupère directement les contenus, éventuellement avec une qualité ou une résolution plus élevée que celle, initiale, du mobile (4), et dans notre exemple sans passer par le dispositif mobile.

On verra dans notre exemple, qu'un contenu est téléchargé depuis le serveur de contenus SCNT à destination d'un dispositif de déport en passant par la passerelle de service GTW.

Notons ici que le déport du contenu présente plusieurs avantages :
- Le dispositif mobile peut être déchargé d'une tâche très consommatrice en ressources (décodage, affichage de la vidéo, etc.) ce qui lui permet de rendre d'autres fonctions pour l'utilisateur dans le même temps (e.g. visualisation d'un courrier, traitement d'un texto, etc.) ;

- la qualité et/ou la résolution du contenu multimédia peuvent être plus élevées sur le TV que sur le dispositif mobile, améliorant ainsi le confort pour l'utilisateur ;
- Le mobile peut servir de télécommande pour des fonctions de base relatives au contenu, comme par exemple l'arrêt de la restitution (« pause »), la reprise (« play »), le contrôle du volume (silence « mute », augmentation du volume « vol+ », diminution du volume « vol- »), etc.

On suppose que, lors d'une étape préalable (non représentée), les deux dispositifs, dispositifs mobile et de déport, se sont tous deux connectés au réseau local, c'est-à-dire à la passerelle de service GTW du réseau local. Dans notre exemple, une fois que les deux équipements sont connectés au réseau via la passerelle de service, ils établissent une communication. A cette fin, le dispositif mobile procède tout d'abord à une découverte (D) de la présence sur le réseau d'un ou plusieurs périphériques de ce type. Cette étape de découverte correspond à une opération bien connue de l'homme du métier, qui peut être mise en oeuvre sous forme d'une requête conforme à un protocole de réseau local, par exemple la norme UPnP. On rappelle que la norme UPnP a pour but de permettre à des terminaux de se connecter aisément et de communiquer simplement au sein d'un réseau local. Elle constitue un ensemble de protocoles de communication basés sur le protocole IP et promulgué par le forum de normalisation UPnP (« UPnP Forum »). Pour contrôler les terminaux du réseau, UPnP utilise des points de contrôle (en anglais : Control Points, en abrégé CP). Un point de contrôle émet classiquement vers les différents terminaux du réseau des messages dits de découverte (*MSEARCH*) afin de récupérer en retour une description des terminaux correspondant à la requête. Ces messages de découverte sont émis le plus souvent en mode de communication point vers multipoint, mode aussi appelé multicast, du point de contrôle vers les terminaux. Un équipement terminal compatible avec la norme UPnP répond à ces messages de requête, et émet de surcroît, à fréquence régulière, des messages de présence (*ALIVE*) pour signifier qu'il est actif et connecté sur le réseau. Le point de contrôle du réseau local, qui est situé ici sur le dispositif mobile émet en mode multicast des messages de recherche (SEARCH) d'équipements d'un type donné, ici des clés électroniques de déport.

La clé concernée répond à la requête en découverte. Le dispositif mobile concerné choisit éventuellement une clé (et donc un téléviseur ou PC associé) parmi celles qui sont découvertes.

Un canal de communication (« WebSocket » - WS) est établi entre le dispositif mobile et la clé électronique afin d'échanger des commandes et/ou des données. Le protocole *Websocket* permet d'assurer des communications bidirectionnelles entre un client et un serveur sur un réseau utilisant le protocole HTTP (de l'anglais Hyper Text Transport Protocol), un protocole de communication client-serveur développé pour les réseaux Internet et en particulier le Web. Par extension, WebSocket est un standard désignant à la fois un protocole réseau et une interface de programmation qui peut être utilisée par une application sur n'importe quel client et serveur Web. Le protocole a été normalisé par l'organisme IETF (Internet Engineering Task Force) dans sa spécification RFC 6455 (de référence « IETF Request for Comments : 6455 ») et l'interface de programmation correspondante par l'organisme W3C (de référence : *The Web Sockets API; W3C Candidate Recommendation 20 September 2012*).

Par la suite, lorsque l'utilisateur sélectionne un contenu (C) et appuie sur la touche de redirection sur l'écran tactile du dispositif mobile, l'application du dispositif mobile requiert à la clé électronique de lancer l'application de déport de la restitution du contenu C repéré par son identifiant (C_ID) ; l'identifiant est alors transformé en URL, par exemple,
http://www.monserveur.com/C_ID

Puis la clé électronique accède au un serveur de contenus SCNT afin de récupérer le contenu numérique C_ID par exemple en mode Streaming, grâce à cette URL. Le mode *Streaming* correspond par définition à un téléchargement continu de contenus multimédia. Le terminal client (ici, la clé électronique) effectue une requête en téléchargeant dans une première étape un document décrivant les paramètres d'accès au service via le protocole HTTP, puis accède au contenu sur le serveur de contenus SCNT, le transmet au dispositif de restitution TV et le service démarre effectivement, c'est-à-dire que le dispositif d'affichage TV peut recevoir et afficher le contenu C.

Pendant le téléchargement du contenu, des commandes (CM) peuvent être émises vers la clé électronique *(pause, jeu, avance rapide,* etc. ) et des messages de statut peuvent être reçus en provenance de la clé électronique (métadonnées, état du dispositif de déport, etc.).

La figure 2 représente une architecture matérielle d'un dispositif de déport connecté à un dispositif mobile du réseau local.

Le dispositif mobile MOB1 ou MOB2 comprend, classiquement, des mémoires M articulées autour d'un processeur CPU. Les mémoires peuvent être de type ROM (de l'anglais Read Only Memory) ou RAM (de l'anglais Random Access Memory), amovibles ou fixes, etc. Il communique avec le réseau local RES1 via le module de communication (COMM) qui lui permet de se connecter avec fils (via un câble Ethernet) ou sans fils (via un canal radio de type WiFI, Bluetooth, Zigbee, etc.) à la passerelle GTW ou à un autre dispositif du réseau local. Comme décrit auparavant, dans notre exemple, un canal de communication point à point « ad-hoc » est utilisé pour une phase initiale d'établissement de la session entre un dispositif mobile et un dispositif de déport. Ce canal peut être de type WIFi Direct, Bluetooth, etc. Puis, selon un mode de réalisation de l'invention, les deux dispositifs dialoguent en mode infrastructure via la passerelle GTW.

Selon un autre mode de réalisation de l'invention, c'est le dispositif mobile qui sert de passerelle en mode « tethering » et les deux dispositifs dialoguent en mode infrastructure IF sans la passerelle de service. Un dispositif mobile (MOB1 ou MOB2) comprend à cet effet un mode de point d'accès ou tethering (TETH), qui lui permet de se transformer en passerelle, pour communiquer avec le deuxième réseau RES2 qui peut être dans ce cas confondu avec le réseau IP mobile.

Dans notre exemple, le dispositif mobile comprend encore un module radio-mobile (par exemple, UMTS) qui lui permet de dialoguer avec un troisième réseau dit réseau mobile du type réseau UMTS. Il comporte enfin une application (CDEP) chargée du contrôle du déport, notamment de la communication avec le dispositif de déport. Le module CDEP, qui peut être logiciel et/ou matériel, est notamment capable d'effectuer les actions suivantes : choix d'un dispositif de déport (parmi plusieurs), demande d'établissement d'un canal de communication point à point avec ce dispositif pour transmission des identifiants du réseau local, récupération et mémorisation de l'identification du dispositif de déport, sélection d'un contenu et transmission d'un identifiant de ce contenu au dispositif de déport, contrôle de la restitution du contenu, etc.

Une partie de la mémoire MEM est reliée au point d'accès Wi-Fi et stocke, entre autres, les paramètres d'identification des passerelles domestiques auxquelles peut accéder le dispositif mobile, les paramètres d'identification et d'association des équipements domestiques au point d'accès lorsque le dispositif mobile est en mode « routeur » (tethering) (table d'identifiants comprenant les identifiant uniques des terminaux domestiques qui ont déjà été autorisés à accéder au réseau domestique via le point d'accès, éléments de routage, etc.), les paramètres d'identification des dispositifs de déport du réseau local (noms, caractéristiques, etc.).

Il comporte aussi un module de communication de type HTTP pour assurer les communications de type HTTP, par exemple de type Websocket (WS) ; on notera qu'une communication de type WS est possible sur un lien Bluetooth.

Tous les modules communiquent classiquement entre eux via un bus de données BUS1.

Dans notre exemple, le dispositif de déport comprend aussi des mémoires M articulées autour d'un processeur CPU. Les mémoires peuvent être de type ROM, RAM, ou autres. Une partie de la mémoire M stocke, entre autres, les paramètres d'identification des passerelles domestiques auxquelles peut accéder le dispositif de déport et l'identification du dispositif de déport (par exemple, « dongle_numéro_36 », ou « clé#2 »). Il communique avec le réseau local RES1 et le dispositif mobile via le module de communication (COMD) qui lui permet notamment de se connecter sans fils (WiFi) à la passerelle de service GTW en mode infrastructure (via la liaison IF) ou directement au dispositif mobile (liaison SP) en mode « WiFi direct » ou Bluetooth. Dans notre exemple, il est alimenté via une interface série de type USB. Il comporte aussi :
- une application (DEP) chargé de la communication avec un dispositif mobile et du déport du contenu. Ce module est notamment capable d'établir une communication, de préférence privée, avec le dispositif mobile via le module de communication COMD, d'accepter une requête pour aller chercher en streaming un contenu repéré par son identifiant C_ID sur le réseau à la place du dispositif mobile, de recevoir des commandes de contrôle de la restitution de la part du dispositif mobile agissant comme une télécommande, de lui transmettre des informations d'identification, d'état, etc.
- un « media player » (MP) capable de restituer (recevoir, décoder, préparer) les flux en mode de streaming et de les délivrer au dispositif de restitution (TV) ; le « media player » comporte entre autres un ensemble de dispositif de déports (audio, vidéo, etc.) aptes à décoder les contenus multimédia, ainsi qu'une interface de communication avec le dispositif mobile apte à interpréter les ordres en provenance de celui-ci (pause, retour arrière, contrôle du volume, etc.)
- un module d'interface avec le dispositif de restitution (HDMI) capable de s'interfacer physiquement et logiquement avec le téléviseur pour lui transmettre le contenu multimédia (audio et vidéo) décodé.
- un module de communication de type HTTP.

Tous les modules communiquent classiquement entre eux via un bus de données BUS2.

Un fournisseur de contenus, gestionnaire du serveur de contenus, peut souhaiter restreindre le nombre d'accès à un contenu acheté. Aussi, un utilisateur, voire le fournisseur de contenus, peut souhaiter restreindre l'accès au contenu à un sous ensemble de dispositifs de déport.

Selon l'invention, une demande d'accès à un contenu issue d'un dispositif mobile est accompagnée d'un identifiant d'au moins un dispositif de déport. Le serveur de ticket répond en retour en transmettant à tout ou partie des dispositifs mobiles les données d'accès. Ensuite, lorsqu'une restitution du contenu est souhaitée, un dispositif de déport accède aux données d'accès. Dans notre exemple de réalisation, un dispositif mobile transmet les données d'accès vers le dispositif de déport associé au dispositif de restitution sur lequel une restitution est souhaitée..

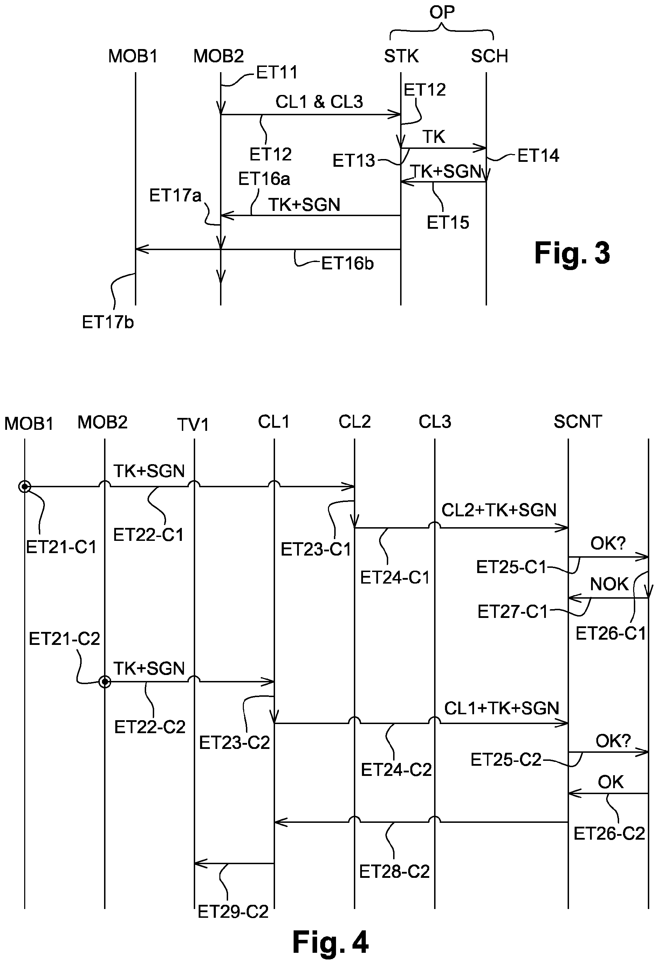

Un exemple de réalisation va maintenant être décrit en référence aux figures 3 et 4.

Dans cet exemple, on suppose que l'utilisateur du réseau local possède deux dispositifs mobiles. Ce même utilisateur possède trois dispositifs de déport STK1-STK3 connectés à trois téléviseurs TV1-TV3, respectivement.

L'utilisateur cherche à afficher sur l'écran du dispositif de restitution un contenu dont la sélection préalable a été effectuée sur le dispositif mobile : en utilisant une application sur son dispositif mobile, dans notre exemple une application TV qui a été préalablement fournie par l'opérateur de réseau et/ou de services, l'utilisateur sélectionne un contenu multimédia (audio, vidéo, etc.) disponible sur un serveur de contenus.

Le serveur de contenus se trouve selon cet exemple dans le réseau WAN mais il pourrait, selon un autre exemple, être situé dans un réseau local d'entreprise, par exemple au niveau de la passerelle de service (6) ou tout autre équipement capable d'héberger un tel serveur de contenus.

Deux phases vont être décrites en référence aux deux figures 3 et 4 respectivement.

La première phase PH1 est consacrée à une demande d'obtention d'un droit d'accès ou de plusieurs droits d'accès.

La deuxième phase PH2 est consacrée à l'accès au contenu par le dispositif de déport en utilisant le droit d'accès obtenu à la première phase.

La première phase PH1 comprend plusieurs étapes référencées ET1n.

Lors d'une première étape ET11, un utilisateur accède à un catalogue de contenus audiovisuels. Dans ce catalogue, l'utilisateur sélectionne, par le biais du premier dispositif mobile MOB1, un contenu C_ID, par exemple une vidéo, et désigne au moins un destinataire, en l'espèce au moins un dispositif de déport qui aura un droit d'accès au contenu lors de la deuxième phase. Une durée de validité DTE peut être également mentionnée.

Dans notre exemple, le destinataire peut être :
- un sous-ensemble de dispositifs de déport rattaché à une même passerelle GTW ; par exemple, une personne (appartenant à une famille) identifiée par son dispositif de déport ;
- L'ensemble de dispositifs de déport rattaché à une même passerelle GTW.

Lors d'une deuxième étape ET12, une requête est émise depuis le premier dispositif mobile MOB1 vers le serveur de ticket STK. Ce dernier crée des données TK représentatives d'un achat, désignées ci-après par le terme « ticket » incluant
- l'identifiant du contenu C_ID commandé,
- les identifiants des dispositifs de déport autorisés à accéder au film
- et accessoirement le prix et une date de validité.

Lors d'une troisième étape ET13, le ticket est transmis au serveur de signature SSIG.

Lors d'une quatrième étape ET14, le serveur de signature crée une signature SGN(TK) électronique du ticket au moyen d'une clé de signature et d'un algorithme de signature connus de l'homme du métier.

Le ticket et sa signature SGN(TK) sont ensuite transmis aux dispositifs mobiles MOB1 et MOB2. Pour ce faire, dans notre exemple, lors d'une cinquième étape ET15, le serveur de ticket STK transmet le ticket et la signature SGN(TK) au serveur de ticket STK qui les transmet ensuite, lors d'une sixième étape ET16a ET ET16b aux dispositifs mobiles MOB1 et MOB2, respectivement.

Lors d'une septième étape ET17a et ET17b, les tickets sont mis à disposition. Dans notre exemple ils sont stockés dans les mémoires des dispositifs mobiles, respectivement. En variante, les tickets pourraient être stockés sur le réseau.

Dans l'exemple, le ticket est transmis aux deux dispositifs mobiles ; cependant, selon une variante, le ticket aurait pu être transmis sur un seul dispositif mobile au choix. Par exemple, à la première étape ET11, un dispositif mobile peut être désigné comme destinataire du ticket.

A ce stade un ticket peut être transmis vers un ou plusieurs dispositifs de déport.

La deuxième phase PH2 comprend plusieurs étapes référencées ET2n-Ck (k=1,2).

Deux cas C1 et C2 vont être décrits :
- un premier dans lequel un dispositif mobile transmet le ticket à un dispositif de déport non désigné dans la requête décrite à la première étape ;
- un second cas dans lequel un dispositif mobile transmet le ticket à un dispositif de déport désigné dans la requête, et donc autorisé, décrite à la première étape.

### Cas 1 : dispositif de déport non autorisé

Lors d'une première étape ET21-C1, un utilisateur d'un dispositif mobile, par exemple le premier dispositif mobile MOB1, requiert la transmission d'un ticket à destination du second dispositif de déport.

Par la suite, lors d'une deuxième étape ET21-C1, l'application du dispositif mobile requiert au dispositif de déport de lancer l'application de déport, de manière à restituer le contenu C repéré par l'identifiant C_ID et le ticket associé ainsi que la signature SGN(TK) ; Une URL est créée incluant toutes ces données ainsi que l'identifiant de la clé électronique requérant un accès au contenu.
*http:*//*www.monserveur.com*/*request.html?CL2&C_id&TK&SGN(TK)*

l'URL inclut en outre l'identifiant de la clé CL2 à l'origine de la requête, dans notre exemple la deuxième clé.

Puis, lors d'une troisième étape ET23-C1, la clé électronique reçoit la requête et traite la requête.

Lors d'une quatrième étape ET24-C1, la clé tente d'accéder au contenu stocké sur le serveur de contenus SCNT grâce à l'URL décrite ci-dessus.

A ce stade, lors d'une cinquième étape ET25-C1, le serveur de contenus transmet au moins le ticket TK et la signature SGN(TK) au serveur de tickets STK.

Le serveur de tickets STK, ayant connaissance de la clé permettant la vérification de la signature, dans notre exemple une clé publique, vérifie la signature. Le serveur de ticket vérifie, lors d'une sixième étape ET26-C1, la validité du ticket TK.

On fait l'hypothèse ici que la signature est valide ; sans quoi l'accès au contenu ne serait pas autorisé. De plus, le dispositif de déport à l'origine de la demande d'accès est le second dispositif ; ce dernier n'est pas un dispositif désigné dans le ticket. Le serveur de ticket informe donc, lors d'une septième étape ET27-C1 le serveur de contenu SCNT que le dispositif de déport n'est pas autorisé.

Le téléchargement n'a pas lieu.

### Cas 2 : dispositif de déport autorisé

Lors d'une première étape ET21-C2, un utilisateur d'un dispositif mobile, par exemple le second dispositif mobile MOB1, requiert la transmission d'un ticket à destination du premier dispositif de déport.

Par la suite, lors d'une deuxième étape ET21-C2, l'application du dispositif mobile requiert au premier dispositif de déport CL1 de lancer l'application de déport, de manière à restituer le contenu CNT repéré par l'identifiant C_ID et le ticket associé ainsi que la signature SGN(TK) ; Une URL est créée incluant toutes ces données ainsi que l'identifiant de la clé électronique requérant un accès au contenu.

Le premier dispositif de déport CL1 crée une requête incluant une URL du type
*http:*//*www.monserveur.com*/*request.html?CL1&C_id&TK&SGN(TK)*

L'URL inclut en outre l'identifiant de la clé à l'origine de la requête, dans notre exemple la première clé CL1.

Puis, lors d'une troisième étape ET23-C2, la clé électronique reçoit la requête.

Lors d'une quatrième étape ET24-C2, la clé tente d'accéder au contenu stocké sur le serveur de contenus SCNT grâce à l'URL décrite ci-dessus.

A ce stade, lors d'une cinquième étape ET25-C1, le serveur de contenus transmet au moins le ticket TK et la signature SGN(TK) au serveur de tickets STK.

On suppose ici que le serveur de signature stocke une clé publique permettant de vérifier la signature SGN(TK), et éventuellement la chaîne de confiance associée. Dans cette configuration, le serveur de ticket vérifie, lors d'une sixième étape ET26-C2, la signature et en conséquence la validité du ticket reçu TK.

On fait l'hypothèse ici que la signature est valide ; sans quoi l'accès au contenu ne serait pas autorisé. De plus, le dispositif de déport à l'origine de la demande d'accès est le premier dispositif ; ce dernier est un dispositif désigné dans le ticket. Le serveur de ticket informe donc, lors d'une septième étape ET27-C1 le serveur de contenu SCNT que le dispositif de déport est autorisé.

Le téléchargement a lieu du serveur de contenus vers la première clé CL1 lors d'une huitième étape ET28-C2.

Lors d'une neuvième étape ET29-C2, la vidéo est, entre autres, décodée par la première clé et transmise au téléviseur TV1 pour y être restituée.

Dans notre exemple, la vidéo est téléchargée en mode *streaming* qui correspond par définition à un téléchargement continu de contenus multimédia. Le terminal client (ici, la clé électronique) effectue une requête en téléchargeant dans une première étape un document décrivant les paramètres d'accès au service via le protocole HTTP, puis accède au contenu sur le serveur de contenus SCNT, le transmet au dispositif de restitution TV et le service démarre effectivement, c'est-à-dire que le dispositif d'affichage TV peut recevoir et afficher le contenu C.

Selon une variante, lors de la première étape ET21-Cn, le dispositif mobile informe également le serveur de contenus que des données d'accès à un dispositif de déport. C'est une manière d'activer le ticket TK. Sans cette activation, le contenu n'est pas téléchargé. Cette activation est une sécurité supplémentaire à la signature électronique.

On a vu précédemment qu'au ticket est associé une signature SGN (TK). La signature électronique permet non seulement d'authentifier l'émetteur d'un message mais aussi de vérifier l'intégrité de ce message (c'est à dire qu'il n'a pas été modifié).

Rappelons que la signature électronique correspond au chiffrement de l'empreinte d'une donnée via une clé privée du signataire. L'empreinte d'une donnée est le résultat d'un calcul effectué à l'aide d'un algorithme de hachage approprié (SHA (Secure Hash Algorithm) ou MD5 (Message Digest) sont les plus courants).

Plus généralement, toute méthode permettant de garantir l'identité du signataire et de garantir que le document n'a pas été modifié depuis que l'émetteur l'a signé peut être utilisée ici en lieu et place d'une signature.

Notons aussi qu'en complément de la signature, les données d'accès peuvent être chiffrées par le biais d'un algorithme de chiffrement symétrique ou asymétrique, permettant de rendre confidentielles ces données d'accès.

Pour la réalisation du procédé de l'invention, un dispositif de déport comprend les modules suivants:
- Un module de réception de donnés d'accès préalablement obtenues par un dispositif MOB1,
- Un module de demande d'accès au contenu, la demande incluant les données d'accès et l'identifiant du dispositif de déport à l'origine de la demande,
- Un module de réception du contenu si l'identifiant du dispositif de déport CL1 à l'origine de la transmission est un identifiant autorisé à accéder au contenu.

Précisons ici que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de l'accès, par des dispositifs de déport (CL1&CL3) associés à un identifiant, à un contenu stocké sur un serveur de contenus (SCNT), le procédé de gestion incluant
- une phase préalable réalisée par un premier dispositif (MOB1) apte à communiquer avec des dispositifs de déport, incluant
une première transmission d'une demande d'autorisation d'accès au contenu, la demande d'autorisation étant accompagnée d'au moins un identifiant de dispositif de déport (CL1&CL3) choisi dans une liste d'identifiants de dispositifs de déport, suivi d'une étape de réception de données d'accès (TK/SGN(TK)) au contenu et de stockage des données d'accès (TK/SGN(TK)) au contenu reçues, lesdites données d'accès incluant ledit au moins un identifiant autorisé (CL1&CL3),
- et une phase d'accès au contenu incluant
- une deuxième étape de transmission, par un dispositif (MOB1,MOB2), des données d'accès stockées lors de la phase préalable, à destination d'au moins un dispositif de déport (CL1),
- une demande d'accès au contenu par l'un des dispositifs de déport (CL1) ayant reçu les données d'accès, la demande incluant les données d'accès (TK/SGN(TK)) et l'identifiant dudit dispositif de déport,
- une réception du contenu par ledit dispositif de déport si l'identifiant dudit dispositif de déport (CL1) correspond à l'un des identifiants inclus dans les données d'accès (TK/SGN(TK)).

2. Procédé de gestion selon la revendication 1, **caractérisé en ce que** la première étape de transmission et la deuxième étape de transmission sont réalisés par deux dispositifs distincts.

3. Procédé selon la revendication 1, **caractérisé en ce que** le dispositif informe le serveur de contenus de la réalisation de ladite deuxième étape de transmission.

4. Système incluant des premiers dispositifs (MOB1,MOB2) comprenant un module de demande d'autorisation d'accès à un contenu stocké sur un serveur de contenus, le contenu ayant vocation à être accéder par des dispositifs de déport (CL1-CL3) associés à un identifiant, la demande étant accompagnée d'au moins un identifiant de dispositif de déport choisi dans la liste d'identifiants de dispositifs de déport et en ce qu'il comprend en outre
- un premier module de transmission d'une demande d'autorisation d'accès au contenu, la demande d'autorisation étant accompagnée d'au moins un identifiant de dispositif de déport (CL1&CL3) choisi dans la une liste d'identifiants de dispositifs de déport ;
- une module de réception des données d'accès au contenu et un module de stockage des données d'accès au contenu reçues;
- un module de transmission apte à transmettre des données d'accès mémorisées depuis un dispositif à au moins un dispositif de déport.
et en ce que le dispositif de déport (CL1-CL3) comprend les modules suivants:
- un second module de réception de donnés d'accès depuis le dispositif (MOB1), les données d'accès incluant au moins un identifiant de dispositif de déport choisi dans la liste d'identifiants de dispositifs de déport,
- un module de demande d'accès au contenu, la demande incluant les données d'accès et l'identifiant du dispositif de déport,
- un module de réception du contenu par ledit dispositif de déport si l'identifiant du dispositif de déport (CL1) correspond à l'un des identifiants inclus dans les données d'accès (TK/SGN(TK)).

## Patentansprüche

1. Verfahren zur Verwaltung des Zugriffs, durch einer Kennung zugeordnete Verlagerungsvorrichtungen (CL1&CL3), auf einen auf einem Inhaltsserver (SCNT) gespeicherten Inhalt, wobei das Verwaltungsverfahren einschließt
- eine vorhergehende Phase, die von einer ersten Vorrichtung (MOB1) durchgeführt wird, die fähig ist, mit Verlagerungsvorrichtungen zu kommunizieren, die eine erste Übertragung eines Genehmigungsantrags des Zugriffs auf den Inhalt einschließt, wobei der Genehmigungsantrag von mindestens einer Kennung einer Verlagerungsvorrichtung (CL1&CL3) begleitet wird, die aus einer Liste von Kennungen von Verlagerungsvorrichtungen ausgewählt wird, gefolgt von einem Schritt des Empfangs von Zugriffsdaten (TK/SGN(TK)) auf den Inhalt und des Speicherns der empfangenen Zugriffsdaten (TK/SGN(TK)) auf den Inhalt, wobei die Zugriffsdaten die mindestens eine genehmigte Kennung (CL1&CL3) einschließen,
- und eine Phase des Zugriffs auf den Inhalt, die einschließt
- einen zweiten Schritt der Übertragung, durch eine Vorrichtung (MOB1,MOB2), der in der vorhergehenden Phase gespeicherten Zugriffsdaten an mindestens eine Verlagerungsvorrichtung (CL1),
- einen Zugriffsantrag auf den Inhalt durch eine der Verlagerungsvorrichtungen (CL1), die die Zugriffsdaten empfangen hat, wobei der Antrag die Zugriffsdaten (TK/SGN(TK)) und die Kennung der Verlagerungsvorrichtung einschließt,
- einen Empfang des Inhalts durch die Verlagerungsvorrichtung, wenn die Kennung der Verlagerungsvorrichtung (CL1) einer der in den Zugriffsdaten (TK/SGN(TK)) eingeschlossenen Kennungen entspricht.

2. Verwaltungsverfahren nach Anspruch 1, **dadurch gekennzeichnet, dass** der erste Übertragungsschritt und der zweite Übertragungsschritt von zwei unterschiedlichen Vorrichtungen durchgeführt werden.

3. Verfahren nach Anspruch 1, **dadurch gekennzeichnet, dass** die Vorrichtung den Inhaltsserver über die Durchführung des zweiten Übertragungsschritts informiert.

4. System, das erste Vorrichtungen (MOB1,MOB2) einschließt, die ein Genehmigungsantragsmodul für den Zugriff auf einen auf einem Inhaltsserver gespeicherten Inhalt enthalten, wobei einer Kennung zugeordnete Verlagerungsvorrichtungen (CL1-CL3) auf den Inhalt zugreifen können, wobei der Antrag von mindestens einer Kennung einer Verlagerungsvorrichtung begleitet wird, die in der Liste von Kennungen von Verlagerungsvorrichtungen ausgewählt wird, und dass es außerdem enthält
- ein erstes Übertragungsmodul eines Genehmigungsantrags des Zugriffs auf den Inhalt, wobei der Genehmigungsantrag von mindestens einer Kennung einer Verlagerungsvorrichtung (CL1&CL3) begleitet wird, die aus der Liste von Kennungen von Verlagerungsvorrichtungen ausgewählt wird;
- ein Empfangsmodul von Zugriffsdaten auf den Inhalt und ein Speichermodul der empfangenen Zugriffsdaten auf den Inhalt;
- ein Übertragungsmodul, das fähig ist, gespeicherte Zugriffsdaten von einer Vorrichtung an mindestens eine Verlagerungsvorrichtung zu übertragen,
und dass die Verlagerungsvorrichtung (CL1-CL3) die folgenden Module enthält:
- ein zweites Empfangsmodul von Zugriffsdaten von der Vorrichtung (MOB1), wobei die Zugriffsdaten mindestens eine Kennung einer Verlagerungsvorrichtung einschließen, die aus der Liste von Kennungen von Verlagerungsvorrichtungen ausgewählt wird,
- ein Zugriffsantragmodul auf den Inhalt, wobei der Antrag die Zugriffsdaten und die Kennung der Verlagerungsvorrichtung einschließt,
- ein Empfangsmodul des Inhalts durch die Verlagerungsvorrichtung, wenn die Kennung der Verlagerungsvorrichtung (CU) einer der in den Zugriffsdaten (TK/SGN(TK)) eingeschlossenen Kennungen entspricht.

## Claims

1. Method for the management of access, via remote devices (CL1&CL3) associated with an identifier, to an item of content stored on a content server (SCNT), the management method including
- a preliminary phase performed by a first device (MOB1) able to communicate with remote devices, including initial transmission of a request to authorize access to the item of content, the authorization request being accompanied by at least one remote device (CL1&CL3) identifier chosen from a list of remote device identifiers, followed by a step of receiving access data (TK/SGN(TK)) for accessing the item of content and storing the received access data (TK/SGN(TK)) for accessing the item of content, said access data including said at least one authorized identifier (CL1&CL3),
- and a phase of accessing the item of content including
- a second step of transmission, by a device (MOB1, MOB2), of the access data stored in the preliminary phase, to at least one remote device (CL1),
- a request to access the item of content via one of the remote devices (CL1) that has received the access data, the request including the access data (TK/SGN(TK)) and the identifier of said remote device,
- reception of the item of content by said remote device if the identifier of said remote device (CL1) corresponds to one of the identifiers contained in the access data (TK/SGN(TK)).

2. Management method according to Claim 1, **characterized in that** the first transmission step and the second transmission step are performed by two separate devices.

3. Method according to Claim 1, **characterized in that** the device informs the content server that said second transmission step has been performed.

4. System including first devices (MOB1, MOB2) comprising a module for requesting authorization to access an item of content stored on a content server, the content being intended to be accessed by remote devices (CL1-CL3) associated with an identifier, the request being accompanied by at least one remote device identifier chosen from the list of remote device identifiers, and in that it furthermore comprises
- a first module for transmitting a request to authorize access to the item of content, the authorization request being accompanied by at least one remote device (CL1&CL3) identifier chosen from the list of remote device identifiers;
- a module for receiving the access data for accessing the item of content and a module for storing the received access data for accessing the item of content,
- a transmission module able to transmit stored access data from a device to at least one remote device,
and in that the remote device (CL1-CL3) comprises the following modules:
- a second module for receiving access data from the device (MOB1), the access data including at least one remote device identifier chosen from the list of remote device identifiers,
- a module for requesting access to the item of content, the request including the access data and the identifier of the remote device,
- a module for receiving the item of content via said remote device if the identifier of the remote device (CL1) corresponds to one of the identifiers contained in the access data (TK/SGN(TK)).
